# EUROPEAN PATENT APPLICATION

(11) **EP 4 016 376 A1**
(43) Date of publication of application: **22.06.2022**
(21) Application number: 20215693.1
(22) Date of filing: 18.12.2020
(51) Int. Cl.: G06K 9/00

(54) **COMPUTER-IMPLEMENTED PROCESS MONITORING METHOD**

(71) Applicant: TOYOTA JIDOSHA KABUSHIKI KAISHA, Toyota-shi, Aichi-ken, 471-8571 (JP)
(72) Inventor: FRANCESCA, Gianpiero, 1140 BRUSSELS (BE)
(74) Representative: Cabinet Beau de Loménie

(57) **Abstract**

A computer-implemented method (10) for monitoring a process to be performed by a person, comprising:
- obtaining (12) at least one image of the person performing the process;
- detecting (14) a human pose (24) of the person in the at least one image;
- detecting (16) at least one object (38, 40) in the at least one image;
returning (18) monitoring information on the process based on at least one geometrical relationship between the detected human pose and the detected at least one object.

## Description

### TECHNICAL FIELD

The present disclosure relates to the field of action detection and process monitoring. In particular, the present disclosure relates to a computer-implemented method for monitoring a process to be performed by a person. The process may be an industrial process, such as manufacturing or repairing.

### TECHNOLOGICAL BACKGROUND

Recent studies have shown that in spite of automation, in industrial processes, most of the quality defects are related to human errors. Human workers are easier to train and more flexible than robots, but they introduce variability in the processes as their performance depends on factors that cannot be easily controlled, such as tiredness, age, physical or mental health, etc.

In an attempt to monitor actions performed by human beings, end-to-end artificial intelligence systems have been developed, which rely on action detection. However, these systems require much training data because they need to implicitly understand the complex actions to monitor. Besides, they are often regarded as black boxes and sometimes not well accepted by humans due to the difficulty of understanding how they work. Therefore, there is room for improvement.

### SUMMARY

In this respect, the present disclosure relates to a computer-implemented method for monitoring a process to be performed by a person, comprising:
- obtaining at least one image of the person performing the process;
- detecting a human pose of the person in the at least one image;
- detecting at least one object in the at least one image;
- returning monitoring information on the process based on at least one geometrical relationship between the detected human pose and the detected at least one object.

The obtaining at least one image may comprise acquiring an image, e.g. through an image acquisition module such as a camera, or getting an already acquired image from a database, e.g. a local or distant server or the like. Hereinafter, unless otherwise stated, "the image" refers to the at least one image. More generally, hereinafter, the article "the" may refer to "the at least one".

The person is a human being. Human pose detection, also known as human pose estimation, is known *per se* e.g. in the field of machine learning. The human pose detection may use a dedicated artificial neural network and may be configured to output at least one indicator of a location, a size and/or an attitude of at least one human person, preferably every human person, in the image.

Object detection is known *per se* too, e.g. in the field of machine learning. The detection of at least one object may use a dedicated artificial neural network (i.e. not the same as that performing the human pose detection), and may be configured to output at least one indicator of a location, a size and/or a type of at least one object in the image. The at least one object to be detected may be predetermined, for instance due to its significance in the process to monitor.

In view of the above, it is understood that the human pose detection and the object detection are performed separately, explicitly, and possibly independently from each other. "Explicitly" means that the detected human pose and the detected object are provided as explicit outputs of the respective detecting steps. As opposed to end-to-end trained action detection systems, which learn to detect actions without exactly knowing what in the image is a human and what in the image is an object, or even whether there is a human in the image, the above method takes advantage of the fact that in processes to be monitored, the interactions between the person performing the process and the objects of significance, possibly those with which he may interact, are well-documented. Therefore, it is possible to simplify the problem of monitoring the process to identifying the person, identifying objects of significance for the process, and determining at least one geometrical relationship between the detected human pose and the detected at least one object. On that basis, monitoring information is returned.

Using explicit object detection and human pose detection increases the understandability of the monitoring method, especially as compared to an end-to-end trained action detection artificial neural network which often works as a black box. In addition, object detection and human pose detection are easier tasks than end-to-end action detection and make the monitoring method much faster to train, even if at least one of them uses an artificial neural network. All in all, the above monitoring method shows increased efficiency and reliability.

In some embodiments, the at least one image comprises a plurality of successive frames of a video clip. Alternatively, the at least one image may comprise a plurality of non-successive frames of a video clip, e.g. selected at a given sampling frequency (e.g. every third frame of the video clip). Yet alternatively, the at least one image may comprise one or more static images, e.g. photographs. Using frames from a video clip enables to take temporal information into account, thus giving access to broader and more detailed monitoring information.

In some embodiments, the process comprises a repeatedly executed cycle and the method comprises identifying at least one occurrence of the cycle in the video clip and returning the monitoring information for each of the at least one occurrence. Industrial processes often comprise the repetition of sub-processes or cycles, e.g. on an assembly line, or more generally a production line. In these circumstances, it is desirable to be able to identify, in the video clip, the temporal boundaries of one of these sub-processes, i.e. one occurrence of a cycle, and return the monitoring information based on the content of this occurrence, optionally independently from what happens in other occurrences of the cycle. The monitoring information may be returned for each of the detected occurrences, thus providing information e.g. on each handled product. The monitoring information may be of the same nature for each occurrence.

In some embodiments, the monitoring information is determined based on the at least one geometrical relationship in at least two of the successive frames. The two successive frames may belong to the same cycle occurrence. This enables redundancy in order to limit false detections. The geometrical relationship may be the same, e.g. to measure the time during which an action is performed, or vary from one frame to another, e.g. when a second given step is supposed to follow a first given step.

In some embodiments, the at least one object comprises an object with which the person is to interact while performing the process. The at least one object may comprise an article such as an article to manufacture or repair, a part, optionally a part on which or with which the process is performed, equipment or tools, etc. Alternatively or in addition, the at least one object may comprise a mark or a reference point, a support (including a hanger), etc. Alternatively or in addition, the at least one object may comprise an object with which the person must not interact while performing the process, e.g. because this object may represent a hazard.

In some embodiments, the detecting the at least one object comprises determining a bounding box and optionally a type of the at least one object. A bounding box may be illustrated by a polygon, e.g. a rectangle. The object type may be selected among a predetermined list of possible object types.

In some embodiments, the detecting the human pose comprises detecting a plurality of body joints or body parts of the person. The body joints or body parts (hereinafter "body features") may be labeled, e.g. as corresponding to a head, left hand, right knee, feet, etc. Therefore, accurate evaluation of the geometrical relationship may be performed.

In some embodiments, the monitoring information comprises at least one indicator of: whether a step of the process has been performed by the person, whether the person has been in danger, whether the person has made a mistake, the person's ergonomics, the person's efficiency, the process duration, or a combination thereof. Therefore, performance of the process, ergonomics and safety may be derived from the indicator(s) output from the monitoring method, thus enabling the process definition and guidelines to be improved.

In some embodiments, the at least one geometrical relationship comprises the distance and/or the overlapping rate between the human pose and the object, and/or the human pose being in an area defined with reference to the detected object, and the monitoring information is returned based on comparing the geometrical relationship to predetermined rules. The distance, overlapping rate or being in a certain area may, as the case may be, be determined for one or more of the body features, and the predetermined rules may be specifically defined from some objects and some body features. The object may be represented by a bounding box thereof. The distance may be a shortest distance between two items detected in the image, e.g. a body feature and an object. The overlapping rate may be defined as a surface ratio of two items on the image. However, other mathematical definitions are possible, provided that they match the process specification of which body part should interact or not with which object.

In some embodiments, the process comprises a manufacturing step of an article on a production line. In some embodiments, the above-mentioned cycle comprises a manufacturing step of an article on a production line. The production line may be an assembly line.

In some embodiments, the at least one object comprises a support of the article. The support of the article may provide a more stable or reliable reference than the article itself.

The present disclosure is further directed to a device for monitoring a process to be performed by a person, the device comprising:
- a module for obtaining at least one image of the person performing the process;
- a module for detecting a human pose of the person in the at least one image;
- a module for detecting at least one object in the at least one image;
- a module for returning monitoring information on the process based on at least one geometrical relationship between the detected human pose and the detected at least one object.

The device may be configured to carry out the above-mentioned monitoring method, and may have part or all of the above-described features. The device may have the hardware structure of a computer.

The present disclosure is further directed to a system comprising the above-described device equipped with a video or image acquisition module to obtain the at least one image. The video or image acquisition module may be a camera or the like.

The present disclosure is further directed to a computer program including instructions for executing the steps of the above-described monitoring method when said program is executed by a computer.

This program can use any programming language and take the form of source code, object code or a code intermediate between source code and object code, such as a partially compiled form, or any other desirable form.

The present disclosure is further directed to a recording medium readable by a computer and having recorded thereon a computer program including instructions for executing the steps of the above-described monitoring method.

The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 is a diagram illustrating steps of a computer-implemented method for monitoring a process according to an embodiment;
- Fig. 2 is a diagram illustrating a geometrical relationship according to an example;
- Fig. 3 is a diagram illustrating an operation of the computer-implemented method for monitoring a process according to an embodiment.

### DETAILED DESCRIPTION OF EMBODIMENTS

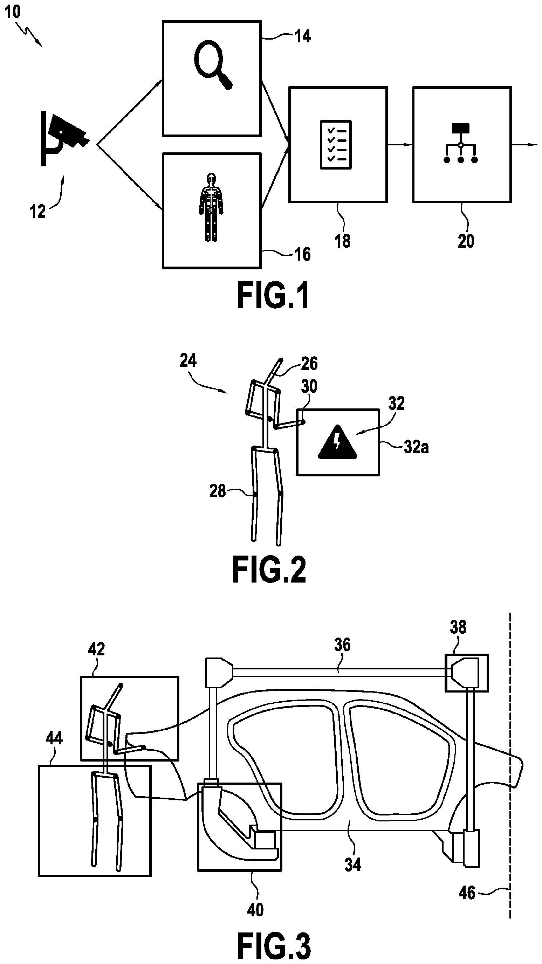

A computer-implemented method for monitoring a process to be performed by a person (hereinafter the "monitoring method") according to an embodiment is described with reference to Fig. 1. As mentioned before, the monitoring method 10 comprises an obtaining step 12 of obtaining at least one image of the person performing the process. If the method is to be carried out in real time, the at least one image may be acquired in real time by an image acquisition module, such as a video acquisition module, e.g. a camera or the like (video cameras, photo cameras, etc.). Alternatively or in addition, the at least one image may be acquired beforehand, and obtained by the monitoring method 10 later, e.g. in case of post-processing of the filmed process.

In the following, it is assumed that the at least one image comprises a plurality of successive frames of a video clip. Nevertheless, other situations are envisaged, as detailed above, and the method may be transposed to a one or more images, whatever their origin.

The obtained at least one image (or successive frames of a video clip) is provided as an input, as such or with intermediate image processing, to an object detecting step 14 and to a human pose detecting step 16. As will be detailed below, the object detecting step 14 and the human pose detecting step 16 are configured to extract information about the process. The object detecting step 14 and the human pose detecting step 16 may be performed in series or in a parallel. In one embodiment, as illustrated, the object detecting step 14 and the human pose detecting step 16 are independent, i.e. none of them relies on the processing performed by the other to perform its own processing.

As mentioned before, the object detecting step 14 comprises detecting at least one object in the at least one image. In the case of a plurality of images, e.g. a plurality of frames, the object detecting step 14 may comprise detecting at least one object in one, part or all of the images. The object may be the same or vary from an image to another.

The object detecting step 14 may comprise executing a computer vision algorithm. More specifically, the object detecting step 14 may comprise using a deep-learning based object detector, e.g. which can be trained to detect objects of interest from images. In an example, the deep-learning based object detector may include YOLOv3 (J. Redmon & A. Farhadi, YOLOv3: An incremental improvement, arXiv: 1804.02767, 2018)). Other object detectors may however be used, such as EfficientNet (M. Tan, R. Pang and Q. V Le, EfficientDet: Scalable and efficient object detection, In Proceedings of the IEEE Conference on Computer Vision and Pattern Recognition (CVPR), doi: 10.1109/cvpr42600.2020.01079, 2020), RetinaNet (T. Lin, P. Goyal, R. Girshick, K. He and P. Dollár, Focal Loss for Dense Object Detection, In Proceedings of the IEEE International Conference on Computer Vision (ICCV), pp. 2999-3007, doi: 10.1109/ICCV.2017.324, 2017), SSD (W. Liu, D. Anguelov, D. Erhan, C. Szegedy, S. Reed, C. Fu and A. C Berg, SSD: Single shot multibox detector, In Proceedings of the European Conference on Computer Vision (ECCV), pp. 21-37, doi: 10.1007/978-3-319-46448-0_2, 2016), FCOS (Z. Tian, C. Shen, H. Chen, and T. He, FCOS: Fully convolutional one-stage object detection, In Proceedings of the IEEE International Conference on Computer Vision (ICCV), pp. 9627-9636, doi: 10.1109/ICCV.2019.00972, 2019), CenterNet (K. Duan, S. Bai, L. Xie, H. Qi, Q. Huang and Q. Tian, CenterNet: Keypoint triplets for object detection, In Proceedings of the IEEE International Conference on Computer Vision (ICCV), pp. 6568-6577, doi: 10.1109/ICCV.2019.00667, 2019), etc.

The object detecting step 14 may comprise determining a bounding box and optionally a type of at least one object. An example is illustrated in Fig. 3, in which the object detecting step 14 has detected a hanger top-front portion 38 and a hanger bottom-rear portion 40 of a hanger 36. As shown, the bounding boxes may be polygonal, e.g. rectangular. A bounding box may be returned by the object detecting step 14 as a list of vertex coordinates or in any other suitable format.

The object type may be chosen from predetermined object types that are to be detected on the image. The object types may be input explicitly to the computer vision algorithm, e.g. during training, or learned from a deep-learning model. With reference to Fig. 3, the object types may be "hanger top-front portion" and "hanger bottom-rear portion". However, other objects may be determined.

It is noteworthy that the object detector may be rather generic and needs only be trained on the objects to detect. Therefore, the required annotation effort is minimal.

As mentioned before, the human pose detecting step 16 comprises detecting a human pose of the person performing the process in the at least one image. In the case of a plurality of images, e.g. a plurality of frames, the human pose detecting step 16 may comprise detecting a human pose of the person in one, part or all of the images. The person may be the same or vary from an image to another. One or more persons may be detected in the at least one image.

The human pose detecting step 16 may comprise executing a computer vision algorithm. More specifically, the human pose detecting step 16 may comprise using a deep-learning based human pose estimator. Detecting the human pose may comprise detecting body features of the person, e.g. one or a plurality of body joints and/or body parts or the person. In an example, the human pose detecting step 16 may comprise computing the 3D and/or 2D skeleton for each person in the image. The body features may include at least one hand, at least one arm, at least one elbow, at least one shoulder, at least one foot, at least one leg, at least one knee, a neck, and/or a head of each person.

In an example, the deep-learning based human pose estimator may include LCR-Net (Rogez, Weinzaepfel, & Schmid, LCR-Net: Real-time multi-person 2E and 3D human pose estimation, In IEEE Trans. On PAMI, 2019). Other human pose estimators may however be used, such as DOPE (Weinzaepfel, P., Brégier, R., Combaluzier, H., Leroy, V., & Rogez, G., DOPE: Distillation Of Part Experts for whole-body 3D pose estimation in the wild, In ECCV, 2020), OpenPose (Z. Cao, G. Hidalgo Martinez, T. Simon, S. Wei, & Y. A. Sheikh. OpenPose: Realtime Multi-Person 2D Pose Estimation using Part Affinity Fields, IEEE Transactions on Pattern Analysis and Machine Intelligence, 2019), DeepCut (Leonid Pishchulin, Eldar Insafutdinov, Siyu Tang, Bjoern Andres, Mykhaylo Andriluka, Peter Gehler, & Bernt Schiele, DeepCut: Joint Subset Partition and Labeling for Multi Person Pose Estimation, In IEEE Conference on Computer Vision and Pattern Recognition (CVPR), 2016), AlphaPose (Fang, H.S., Xie, S., Tai, Y.W., & Lu, C., RMPE: Regional Multi-person Pose Estimation, In ICCV, 2017), etc. It is noteworthy that the human pose estimator may be rather generic and needs only be trained with generic human poses. Therefore, publicly available training sets may be used, without requiring special adaptation. As a consequence, the setup of the monitoring method 10 is fast and simple.

Figure 2 shows an example of a detected human pose 24, comprising a plurality of body parts, such as the neck 26, and a plurality of body joints, such as the left knee 28. In this figure, the detected body parts and the detected body joints, which connect the body parts to one another, form a skeleton. A detected body feature 26, 28 may be returned by the human pose detecting step 16 as point or line coordinates, or in any other suitable format.

The human pose detecting step 16 provides a representation of the person's attitude, or pose, while performing the process. Such representation may be used to perform ergonomics studies and possibly to adapt the process to provide better ergonomics to the person.

With reference to Fig. 1 again, the detected object and the detected human pose, output by the respective detecting steps 14, 16, are provided as inputs to a determining step 18, configured to return monitoring information on the process based on at least one geometrical relationship between the detected human pose and the detected at least one object. The detected object and the detected human pose form a numerical representation of the process to monitor.

An example of how the determining step 18 may operate is illustrated in Fig. 2. Figure 2 shows a detected human pose 24 and a detected object 32, characterized by a bounding box 32a thereof. In this example, the object type is specified as dangerous, e.g. because it corresponds to an object that the person should not come close to. The determining step 18 evaluates a geometrical relationship between the human pose 24 and the detected object 32. For instance, it is specified that in case of overlap between any part of the human pose 24 and the bounding box 32a, the person is in danger while performing the process. In the present case, the determining step 18 would return monitoring information indicating danger since the right hand 30 overlaps the bounding box 32a.

The determining step 18 may rely on a rule engine, comprising one or more predetermined rules and evaluating whether the geometrical relationship between the detected object and the detected human pose meets one or more of the rules. In other words, the rule engine may comprise a geometric reasoning logic.

The example of Fig. 2 illustrates one rule possibility. The skilled person appreciates that many different rules can be used for the rule engine underlying the determining step 18. For instance, the at least one geometrical relationship may comprise the distance and/or the overlapping rate between the human pose and the object, and/or the human pose being in an area defined with reference to the detected object. The geometrical relationship may apply to the whole human pose or only to a part thereof, e.g. a hand when it is to be check that that hand performs or not a certain action. The corresponding body features may be specified or not: the rule may apply to some predetermined body features only or to be met as soon as any body feature meets the condition. The geometrical relationship may be determined in 2D and/or in 3D, for instance depending on how the human pose and the object are detected. In an embodiment, even if the object is detected in 2D at first, a 3D position thereof may be estimated based on given data of the process to monitor, e.g. the object having always the same size in reality, the camera for obtaining the image being fixed, etc. Afterwards, the geometrical relationship may be determined in 3D. A 3D determination allows a more accurate and more representative monitoring.

Instead of or in addition to a dangerous object that the person should avoid, the at least one object may comprise an object with which the person is to interact while performing the process. For instance, that would correspond to an object that the person has to manipulate or work on during the process.

The rules may be derived from the process standard: since the process, especially in case of an industrial process, is well-defined, these definitions may be translated into mathematical rules that the geometrical relationships would meet or not. Such cases are easy to implement because the rules already exist and only require geometrical translation, as compared to other methods in which the rules must be developed *ex nihilo.*

On that basis, monitoring information is determined and returned. The monitoring information as output by the determining step 18 may comprise information about the video frames during which a particular event (corresponding to one or more predetermined rules) has occurred and, for each of those frames, the location where such event occurred. The location may be determined based on the location of the detected human pose and of the detected object.

Besides, the monitoring information may be determined based on the at least one geometrical relationship in at least two of the frames. The frames may be successive or not. Taking the temporal dimension into account provides richer monitoring information, e.g. to determine how much time the person spends on which tasks, and eventually to detect possible quality defects originating from a non-compliant process. Alternatively or in addition, the determining step may comprise temporal rules in order to check that an action was duly performed during the normally applicable time, as opposed to the person's unintentional superfluous gestures which may happen to meet the rule for a relatively short time.

Back to Fig. 1, optionally, the monitoring method 10 may comprise a sorting step 20 in order to evaluate the monitoring information predictions returned by the determining step 18 and refine these predictions by removing potential errors, e.g. coming from an inaccurate assessment of the geometrical relationships.

The sorting step 20 may comprise executing a classifier. More specifically, the sorting step 20 may comprise using a human activity recognition algorithm. In an example, the algorithm may be based on dense trajectories (Wang, Heng & Kläser, Alexander & Schmid, Cordelia & Liu, Cheng-Lin. (2014). WangH2013-dense trajectories-IJCV), although other approaches are possible. The classifier, once trained, is able to distinguish the process to monitor from other spurious activities. In an example, the training may be based on a manually annotated dataset of outputs of the determining step 18, in turn obtained from a number of samples (e.g. 700) showing the process and a number of samples (e.g. 700) showing spurious activities. However, other trainings are encompassed: the selection of an appropriate classifier and the definition of number of training sample can be performed by the skilled person based on his knowledge of the art, if necessary after a few iterations.

An example of applying the monitoring method to an actual process is described with reference to Fig. 3. In Fig. 3, the process comprises a manufacturing step of an article, here an automotive vehicle, on a production line. However, other processes are encompassed, either on a line or not, and may be e.g. repairing or utilizing instead of manufacturing.

In this case, the manufacturing step comprises installation of grommets in the back light of a car. However, other steps are encompassed: the vehicle needs not be a car and the step needs not be an installation, or may be an installation of another component.

On the assembly line, the car 34 moves forward, i.e. from left to right in Fig. 3, followed by another car on which similar steps, if not the same, are generally to be carried out. Each repetition of these steps is an occurrence of a cycle, and the present example is an illustration of a case where the process comprises a repeatedly-executed cycle. In these circumstances, the method may comprise identifying at least one occurrence of the cycle, e.g. in the video clip, and returning the monitoring information for each of the at least one occurrence. Therefore, two sub-problems should be solved: detecting the occurrences (cycle segmentation) and returning the monitoring information for each occurrence.

In order to move forward, in this example, the car 34 may be supported by a support, e.g. a hanger 36. The at least one object to detect may comprise a portion of the car (article) 34 itself, or a portion of the support, here the hanger 36: as mentioned before, in this example, the object detecting step 14 is set to detect the hanger top-front portion 38 and the hanger bottom-rear portion 40, as objects of interest. However, other portions may be detected in addition or alternatively. Besides, the car 34 may be supported by a support even though it does not move. The support may be the same although the car model may vary; thus, the support may provide an unchanged reference to estimate positions in the image.

Specifically, in the example of Fig. 3, the monitoring method 10 should determine the beginning and the end of each occurrence. One possibility is to consider a cycle-limit line 46 on the image. The cycle-limit line 46 may be an imaginary line, e.g. an edge of the image or a line at a set distance thereto, or a real line, e.g. a landmark of the assembly line. The cycle-limit line 46 may be straight or curved. Other limits than lines are also encompassed.

Based on the fact that the hanger 36 moves together with the car 34, the monitoring method may determine that an occurrence of the cycle begins or ends whenever a given portion of the hanger 36 (and/or the car 34) crosses the cycle-limit line 46. For instance, in the example of Fig. 3, it is determined that a new occurrence begins when the hanger top-front portion 38 crosses the cycle-limit line 46, and that this occurrence ends when the hanger bottom-rear portion 40 crosses the cycle-limit line 46. Other rules can be set, and in particular, the cycle-limit line 46 needs not be the same for detecting the beginning and end of the occurrences. Also, the end may not be detected explicitly, but may be set to correspond to the beginning of the following cycle. Conversely, the beginning may not be detected explicitly, but may be set to correspond to the end of the previous cycle.

Detection of the beginning and/or end of the occurrences generally triggers very few mistakes, if any, so that the resulting predictions may not need to be processed by the sorting step 20, even though the rest of the monitoring information is. This results in an increase computing efficiency.

In order to determine the rest of the monitoring information, in this example, the geometrical relationship is defined as follows: from the position of the hanger bottom-rear portion 40, a hand area 42 and a foot area 44 are defined. These area are defined as polygonal, e.g. at set coordinates to the hanger bottom-rear portion 40. In the determining step 18, it is determined that the installation of the grommets is carried out when the person has his hands in the hand area 42 and his feet in the foot area 44. More generally, the geometrical relationship between the detected human pose and the detected object may include part or all of the human pose being in an area defined with reference to the detected object.

In this embodiment, the division of the video clip is several occurrences may be carried out at the same time as the determination of the monitoring information: the determining step 18 may comprise specific rules to identify to which occurrence the current image belongs, while other rules aim to determine the rest of the monitoring information in relation with the detected human pose. In other embodiments, the division of the video clip in several occurrences of the cycle may be carried out between the obtaining step 12 and the detecting steps 14, 16, or even before the obtaining step 12, in which case the obtaining step 12 may take only one occurrence as an input.

As detailed above, the monitoring information may then undergo a sorting step 20.

The monitoring information, as output by the determining step 18 and/or the sorting step 20, may comprise at least one indicator of: whether a step of the process has been performed by the person (e.g. if the hands and feet were in the hand and foot areas, respectively), whether the person has been in danger (e.g. as detailed with reference to Fig. 2), whether the person has made a mistake (e.g. if an occurrence had an unusual duration, or if the human pose did not have the expected attitude), the person's ergonomics (e.g. based on the human pose), the person's efficiency (e.g. based on unnecessary gestures or process completion time), the process duration, or a combination thereof. The indicators may be output as continuous or discrete values, or in any other suitable format.

Although the diagram of Fig. 1 has been described in terms of method steps, it could equally represent the architecture of a device for monitoring a process to be performed by a person, the device comprising a module 12 for obtaining at least one image of the person performing the process; a module 14 for detecting a human pose of the person in the at least one image; a module 16 for detecting at least one object in the at least one image; a module 18 for returning monitoring information on the process based on at least one geometrical relationship between the detected human pose and the detected at least one object. The device may be a computer or a computer-like system. As illustrated in Fig. 1, the device may be equipped with a video acquisition module, shown as a camera in the obtaining module 12, to obtain the at least one image.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (10) for monitoring a process to be performed by a person, comprising:
- obtaining (12) at least one image of the person performing the process;
- detecting (14) a human pose (24) of the person in the at least one image;
- detecting (16) at least one object (38, 40) in the at least one image;
- returning (18) monitoring information on the process based on at least one geometrical relationship between the detected human pose and the detected at least one object.

2. The method of claim 1, wherein the at least one image comprises a plurality of successive frames of a video clip.

3. The method of claim 2, wherein the process comprises a repeatedly executed cycle and the method comprises identifying at least one occurrence of the cycle in the video clip and returning the monitoring information for each of the at least one occurrence.

4. The method of claim 2 or 3, wherein the monitoring information is determined based on the at least one geometrical relationship in at least two of the successive frames.

5. The method of any one of claims 1 to 4, wherein the at least one object comprises an object with which the person is to interact while performing the process.

6. The method of any one of claims 1 to 5, wherein the detecting the at least one object comprises determining a bounding box (32a) and optionally a type of the at least one object.

7. The method of any one of claims 1 to 6, wherein the detecting the human pose (24) comprises detecting a plurality of body joints (28) or body parts (26) of the person.

8. The method of any one of claims 1 to 7, wherein the monitoring information comprises at least one indicator of: whether a step of the process has been performed by the person, whether the person has been in danger, whether the person has made a mistake, the person's ergonomics, the person's efficiency, the process duration, or a combination thereof.

9. The method of any one of claims 1 to 8, wherein the at least one geometrical relationship comprises the distance and/or the overlapping rate between the human pose (24) and the object (32), and/or the human pose (24) being in an area (42, 44) defined with reference to the detected object (40), and the monitoring information is returned based on comparing the geometrical relationship to predetermined rules.

10. The method of any one of claims 1 to 9, wherein the process comprises a manufacturing step of an article (34) on a production line.

11. The method of claim 10, wherein the at least one object comprises a support (36) of the article (34).

12. A device for monitoring a process to be performed by a person, the device comprising:
- a module for obtaining at least one image of the person performing the process;
- a module for detecting a human pose (24) of the person in the at least one image;
- a module for detecting at least one object (38, 40) in the at least one image;
- a module for returning monitoring information on the process based on at least one geometrical relationship between the detected human pose and the detected at least one object.

13. A system comprising the device of claim 12 equipped with a video acquisition module to obtain the at least one image.

14. A computer program including instructions for executing the steps of the method of any one of claims 1 to 11 when said program is executed by a computer.

15. A recording medium readable by a computer and having recorded thereon a computer program including instructions for executing the steps of the method of any one of claims 1 to 11.

## Amended claims

### Amended claims in accordance with Rule 137(2) EPC.

1. A computer-implemented method (10) for monitoring a process to be performed by a person, the process comprising a manufacturing or repairing step of an article (34) on a production line, the method (10) comprising:
- obtaining (12) at least one image of the person performing the process;
- detecting (14) a human pose (24) of the person in the at least one image;
- detecting (16) at least one object (38, 40) in the at least one image;
- returning (18) monitoring information on the process based on at least one geometrical relationship between the detected human pose and the detected at least one object.

2. The method of claim 1, wherein the at least one image comprises a plurality of successive frames of a video clip.

3. The method of claim 2, wherein the process comprises a repeatedly executed cycle and the method comprises identifying at least one occurrence of the cycle in the video clip and returning the monitoring information for each of the at least one occurrence.

4. The method of claim 2 or 3, wherein the monitoring information is determined based on the at least one geometrical relationship in at least two of the successive frames.

5. The method of any one of claims 1 to 4, wherein the at least one object comprises an object with which the person is to interact while performing the process.

6. The method of any one of claims 1 to 5, wherein the detecting the at least one object comprises determining a bounding box (32a) and optionally a type of the at least one object.

7. The method of any one of claims 1 to 6, wherein the detecting the human pose (24) comprises detecting a plurality of body joints (28) or body parts (26) of the person.

8. The method of any one of claims 1 to 7, wherein the monitoring information comprises at least one indicator of: whether a step of the process has been performed by the person, whether the person has been in danger, whether the person has made a mistake, the person's ergonomics, the person's efficiency, the process duration, or a combination thereof.

9. The method of any one of claims 1 to 8, wherein the at least one geometrical relationship comprises the distance and/or the overlapping rate between the human pose (24) and the object (32), and/or the human pose (24) being in an area (42, 44) defined with reference to the detected object (40), and the monitoring information is returned based on comparing the geometrical relationship to predetermined rules.

10. The method of any one of claims 1 to 9, wherein the at least one object comprises a support (36) of the article (34).

11. A device for monitoring a process to be performed by a person, the process comprising a manufacturing or repairing step of an article (34) on a production line, the device comprising:
- a module for obtaining at least one image of the person performing the process;
- a module for detecting a human pose (24) of the person in the at least one image;
- a module for detecting at least one object (38, 40) in the at least one image;
- a module for returning monitoring information on the process based on at least one geometrical relationship between the detected human pose and the detected at least one object.

12. A system comprising the device of claim 11 equipped with a video acquisition module to obtain the at least one image.

13. A computer program including instructions for executing the steps of the method of any one of claims 1 to 10 when said program is executed by a computer.

14. A recording medium readable by a computer and having recorded thereon a computer program including instructions for executing the steps of the method of any one of claims 1 to 10.
